# EUROPEAN PATENT APPLICATION

(11) **EP 4 682 716 A1**
(43) Date of publication of application: **21.01.2026**
(21) Application number: 24188524.3
(22) Date of filing: 15.07.2024
(51) Int. Cl.: G06F 9/48, G06F 9/50

(54) **TASK STEALING IN DISTRIBUTED COMPUTING SYSTEMS**

(71) Applicant: Imec VZW, 3001 Leuven (BE)
(72) Inventor: WUYTS, Roel, 3190 Boortmeerbeek (BE); HERZEEL, Charlotte, 3000 Leuven (BE); VERACHTERT, Wilfried, 3140 Keerbergen (BE)
(74) Representative: Winger

(57) **Abstract**

A dynamic task scheduler (100) and related scheduling method (600) are disclosed. The scheduler comprises multiple interconnected workers (110a-d). Each worker comprises a manager submodule (111), an executor submodule (113), and a message channel (112) operatively connecting the manager submodule to the executor submodule and the manager submodules of remote workers. Each manager submodule is configured to create tasks (605) dynamically in a parent-child relationship, thereby enabling the runtime decomposition of a program into tasks, add dependencies to the tasks to constrain an execution order thereof, track (603) the added dependencies, and changing a task status from pending to ready if the task's start dependencies are resolved. Each worker's manager submodule is further configured to issue a stealing request (610) to a remote worker if none of its tasks has the ready status and accept migration (613) of a ready task from the remote worker. Each executor submodule is configured to receive ready tasks from the message channel and execute said tasks on execution hardware.

## Description

### Field of the invention

The present invention relates to the field of dynamic task schedulers for distributed computing systems and more particularly relates to dynamic task schedulers that implement task stealing in distributed computing environments for high performance computing (HPC).

### Background of the invention

Software-based work stealing is a known scheduling technique for shared memory multithreaded compute core architectures, which has been adopted in parallel programming models like Cilk, Intel TBB, Java fork/join, etc., to divide computational work more efficiently among multiple compute cores. These work stealing implementations improve the load balancing of dynamic and irregular workloads. Some attempts have been made to implement the idea of work stealing on distributed compute systems, but at best they offer partial solutions in the form of schedulers for restricted programming models that can only implement a restricted set of applications. It is challenging to implement migration of tasks between distributed compute nodes, as tasks may refer to data that is not available on another address space.

One approach to distributed work stealing is the so-called "bag of tasks" programming model where tasks cannot have dependencies, so that every task can be executed independently. Dependency-free tasks make it easy to migrate tasks between compute nodes of a distributed high-performance computing (HPC) system, but the number of applications that can be expressed using the "bag of tasks" programming model is limited. In contrast, the "tied task" programming model allows dependencies between tasks, but it does not allow to migrate such tasks between distributed compute nodes by work stealing, which limits the applicability of work stealing. Other approaches impose similar restrictions, for example by disallowing tasks that refer to global and free variables. Again, the goal is to make task migration easier to implement.

For example, Olivier Tardieu et al. "A work-stealing scheduler for x10's task parallelism with suspension", ACM SIGPLAN Notices, vol. 47, no. 8, pp. 267-276, August 2012, describe a work-stealing scheduler in the framework of the X10 programming language for scalable concurrent and distributed applications. A disadvantage of this work-stealing scheduler is that load balancing is only sought for each address space separately, lacking support for load-balancing across different address spaces of a partitioned global address space. Moreover, it is the responsibility of the user to define the different address spaces and their mappings to compute nodes of a cluster in advance, which impacts overall performance by the number of times a task will have to be shifted between address spaces at runtime. In consequence, the user is advised to distribute code and task judiciously at launch time to ensure that they remain collocated at runtime.

It is therefore desirable to provide work-scheduling methods and implementations for high-performance computing systems that achieve efficient balancing of dynamic and irregular workloads across many compute nodes of a distributed computing system, which can be expressed in or extend the respective execution models of a wide range of parallel programming languages and are easy to use from a programmer's perspective.

### Summary of the invention

It is an object of embodiments of the present invention to overcome the above-mentioned disadvantages.

The above objective is accomplished by a dynamic task scheduling method and a distributed task scheduler system as set out in the claims of the present invention.

In embodiments of the invention, the dynamic decomposition of programs into a plurality of tasks is realized by the spawning of new tasks, e.g. smaller sub-tasks or continuation tasks. The decomposition is a dynamical process during program runtime, meaning that new child tasks are constantly created by running tasks (tasks that are currently executed) as the program progresses. The lasting dynamic program decomposition into tasks by way of task spawning overlaps in time with the dependency management steps (dependency addition, tracking and removal) and task-stealing steps for existing tasks that have been created previously. It is understood that dependency management only needs to be performed for the existing tasks, i.e. the tasks that at any given moment in time have been created as part of the decomposition process but are not yet terminated or killed. Compared to a static task decomposition, the exact number and timing of active tasks, and their scheduling on worker modules, is not known in advance. In embodiments of the invention, a task spawned by a task running on a worker node (worker module associated with a particular compute node) may be put in a status-dependent task queue of that worker node. The spawned child task may be fetched from a ready task queue and executed by the worker node, or it might be stolen by another worker resident on a remote compute node, if all its start dependencies have been resolved. In embodiments of the invention, a parent task spawning a child task generally has no influence on which worker node this child task will run ultimately. This avoids that the programmer or user is burdened with difficult problem of deciding to which worker module a specific task should be assigned at the programming stage and/or simplifies the compiler or runtime engine if this decision is taken at compile or runtime respectively.

Preferably, a task can only be stolen once to avoid stealing of an already stolen task. This prevents multiple stealing of tasks before they are actually executed, thus avoiding complex location tracking of stolen tasks and reducing communication overhead. This is particularly important in the early phase after launching of a user program, because many worker modules will not be busy executing tasks yet and therefore looking for work to do by issuing task stealing requests to other worker modules. This can easily lead to an indefinite delay in the execution of the few tasks that have been generated in the early program phase. Flooding of the inter-message channel network of the distributed task scheduler is also advantageously prevented in embodiments of the invention in which task stealing by idle worker modules can be suspended temporarily.

In embodiments of the invention, each dynamically created task of the program decomposition into the task tree may be encapsulated into and represented by a task object which contains an identifier of the task (task object identifier) and a reference or copy of the task's code block and associated code arguments (e.g. input and output data objects).

In embodiment of the invention, a set of counters may be implemented by the manager submodules, which track the number of unresolved start and stop dependencies related to each task. In such embodiments, the stop dependency counter associated with a (running) parent task is incremented each time it spawns a child task and decremented when one of its child tasks has terminated. When a task is spawned that depends on the outputs and thus on the prior execution of one or more sibling tasks, its associated start dependency counter is set accordingly. Termination of each of the one or more sibling tasks causes the start dependency counter of the dependent task to be decremented again. Start and stop dependencies for a given task are considered to be resolved once the respective counter associated with that task has reached a zero count. Tasks for which all start dependencies have been resolved are no longer in a 'pending state' and assume a 'ready for execution state' (or 'ready state' for short). Tasks are allowed to terminate definitely, after the tasks' code block execution by an executor submodule, as soon as all their stop dependencies have been resolved (e.g. no outstanding child tasks). Advantageously, a 'running state' and an 'executed state' of the different tasks do not have to be tracked explicitly by the distributed task scheduler as they are defined implicitly by the fact that the corresponding task object is absent in the status-dependent task queues of the worker nodes and the task's code block is either running or has completed running on one of the workers' executor submodules. This reduces the memory requirements associated with the different worker modules and also reduces the communication overhead between the worker modules.

In embodiments of the invention, the manager submodule of each worker node preferably stores, for each native task that has been originally created on that worker node, the task object identifiers of those tasks whose start and/or stop dependencies require updating once the native task has terminated. A pending task object or any other adequate data structure may be created in conjunction with each new task for the purpose of storing the start and stop dependency counters associated with the created task, as well as the identifiers of all other tasks that are dependent on the termination of the created task. If the native task has been stolen after its creation and before its execution on a remote (e.g., non-native) worker node, then the manager submodule of the remote node signals the task completion to the worker node whereon the stolen task was originally created. The pending task object may be released or destroyed once the corresponding task is done, i.e. executed and not having any outstanding stop dependencies.

In embodiments of the invention, the migration of a task includes the transmission over the messaging network of the task code block from the message channel of the victim worker to the message channel of the thief worker, but advantageously excludes the transmission of any task-related dependency data. Keeping the pending task object within the victim worker further reduces the communication overhead. Furthermore, task code blocks are preferably executed in an uninterrupted manner by the executor submodules in embodiments of the invention, thus not relying on any call stack (recording the tasks execution process and re-entry points) for task resumption at a later time. Programs are assumed to not block on the return value of a task. Rather explicit continuation tasks are created to handle the results of tasks. This facilitates the migration of task code during task stealing as no call stack needs to be transmitted between the worker modules. Task code arguments, e.g. input data, input variables or constants are held by memory (data) objects that are globally accessible in the shared memory system and therefore do not have to be moved from the victim worker module to the thief worker module when the task is being stolen - transmitting a reference (e.g. object identifier, possibly in combination with an offset) to these input arguments together with the corresponding code block is sufficient. This further facilitates the migration of task code during task stealing and reduces the data traffic across the network that interconnects the different worker modules.

In embodiments of the invention, a victim worker module for task stealing may be picked at random by a thief worker module. This has the advantage that expensive broadcasting of workload information among worker modules can be avoided and frequent interruptions of ongoing work minimized. Furthermore, the task within the victim worker module that has the 'ready for execution' status for the longest time, e.g. the task that remained for the longest period of time within the ready task queue of the victim worker, may be the one task that is selected for stealing, e.g. the stolen task that is sent from the victim worker to the thief worker in response to a task stealing request. The manager submodule of each worker module may be configured to keep a record of the residence time of each task within the ready task queue. Selecting the task with the longest residence time for task stealing has the advantage that tasks representing a larger workload are more likely to be stolen in response to a task stealing request, certainly if the program follows a recursive division scheme. More comprehensive or complex tasks are thus placed earlier into the ready task queues and remain there for longer times. The proposed selection criterion is therefore an inexpensive way to filter out the bigger and more complex tasks, which helps to reduce the scheduling overhead. Nonetheless, alternative selection criteria for the task to be stolen may be applied. For instance, tasks eligible for stealing could be ranked or prioritized according to the number of instructions that their code blocks contain, or a weighted count of instructions may be used in which a more important weight is given to specific instructions, such as the launching of sub-tasks.

In embodiments of the invention, the task scheduler is provided in a distributed manner, which means that the task scheduler is realized as a distributed set of independent worker modules, each residing on one of the compute nodes of the distributed computing network (e.g. hardware-implemented worker module located on the compute node or worker software running on the compute node). The worker modules of the distributed task scheduler are interconnected and participate in the scheduling and the dynamic creation of tasks related to the decomposition of one or more user programs. The distributed task scheduler is adapted to carry out the previously mentioned method steps.

It is an advantage of embodiments of the invention that the distributed task scheduler and task scheduling method are conceived to perform and scale well in parallel computing architectures such as supercomputers that comprise a very large number of interconnected compute nodes. It is a further advantage of embodiments of the invention that irregular and dynamically varying workloads can be balanced efficiently through a task stealing mechanism. Furthermore, communication overhead with respect to task scheduling can be advantageously reduced, thereby minimizing the amount of control messages that needs to be exchanged between the independent worker modules.

In embodiments of the invention, the manager submodule and the executor submodule of each worker module preferably run in parallel. For instance, the scheduling protocol of the manager submodule and the execution protocol of the executor submodule, when implemented as a continuous loop process, are configured to run in parallel, thus allowing worker modules to look for work ahead of time and issue a task stealing request as soon as possible, e.g. as soon as an empty ready task queue is detected by the manager submodule, even though the executor submodule might still be busy executing task code. In alternative embodiments, the busy state busy state of the executor submodule may be checked by the manager submodule first and the issuing of a task stealing request may be delayed until after the executor submodule has switched back to an idle state.

It is a further advantage of embodiments of the invention that dynamic workload balancing can be obtained for a variety of applications without requiring users to perform dynamic profiling of their application during runtime and identify hotspot so as to be able to fine-tune their application code to match and perform well with the underlying hardware architecture.

Yet another advantage of embodiments of the invention resides in the overall reduction of the communication overhead related to task stealing and task dependency management. Moreover, there is no restriction as to where a task may be located during execution, which significantly simplifies the programming task for the user.

It is yet another advantage of embodiments of the invention that the dynamical task scheduling method does not require synchronization constructs like barriers or locks, is free of deadlocks and rules out race conditions.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 shows a distributed task scheduler for a distributed computing system in accordance with embodiments of the invention.
FIG. 2 illustrates the dynamic decomposition of a user program into smaller tasks at runtime, in accordance with embodiments of the invention.
FIG. 3 and FIG. 4 illustrate a task stealing method in accordance with embodiments of the invention from the perspective of the thief worker and the victim worker respectively.
FIG. 5 shows a distributed computing system implementing a distributed task scheduler in accordance with embodiments of the invention.
FIG. 6 is a flow diagram illustrating task scheduling steps performed by the individual worker modules of a distributed task scheduler in accordance with embodiments of the invention.

The drawings are only schematic and are non-limiting. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the context of the present invention, a computer program is a sequence of statements that are expressed in or can be translated into a machine language for the purpose of execution. A task-based or task-oriented computer program means that statements of the program can be grouped into units of computational work that are concurrent and can be executed independently from each other, i.e. can be executed in parallel. Here, concurrency means that a program can be subdivided into multiple tasks and these tasks can be reordered and executed independently, either on the same execution unit or on different execution units, at the same time (i.e. task-parallelism) or at different moments in time. The programming model or execution model may provide or support language constructs which implement the grouping of program statements into units of work.

In the context of the present invention, a task refers to a unit of computational work that needs to be mapped to an execution hardware. The unit of computational work may correspond to one or more statements of a user program code, e.g. in the form of a subroutine, which can be compiled into a set of machine-readable instructions available at runtime and subsequently mapped to execution hardware units (e.g. one or more hardware threads) of one of the executor submodules of the distributed task scheduler. Units of computational work do not have to be fixed in size. Each task can be represented in a software implementation through a corresponding task object that comprises a unique identifier of the task, a (compiled) user code block as task body, and a set of arguments for the code block. The arguments may specify the references to one or multiple memory objects that are inputs to the task and may specify the references to one or multiple memory objects in which outputs of the task are to be held. The units of computational work may be split into subtasks, provided it is not specified as an atomic task that executes as single block without interruption. Moreover, the units of computational work are not restricted to statements of a user program code, but may also include work related to data formatting (e.g. vectorization), address calculation (e.g. nested or flat access pattern definitions on vectors, matrices or tensors, such as stride access), prefetching, etc.

In embodiments of the invention, a user program is decomposed into a plurality of tasks that are created dynamically at run time. Decomposing the user program into tasks in accordance with a parent-child relationship results in a task tree structure in which each vertex or node of the task tree is associated with one of the dynamically created tasks. The dynamic decomposition of the user program into tasks can be constrained to follow user-specified task dependencies in the program source code, which are supported by the underlying programming model. A task that dynamically spawns one or more child tasks while running, corresponds to a parent node of the task tree structure, whereas the spawned child tasks correspond to child nodes that are directly connected to the parent node. In embodiments of the invention, tasks can do computational work and/or command the creation of child tasks. Tasks directed to pure computational work, which do not spawn any child tasks, correspond to leaf nodes of the associated task tree structure.

In the context of the present invention, a task is said to be 'pending' or in a 'pending state' if it has unresolved start dependencies and is said to be 'ready for execution' or in a 'ready for execution state' if it has no unresolved start dependencies. Only tasks that are ready for execution are allowed to run (e.g. executing the task code block) on execution hardware owned or controlled by the executor submodules of the distributed set of workers, e.g. by moving them into a separate ready task queue or, if the task has been stolen, by placing them in a stolen task buffer. Hence, tasks are eligible for execution by the executor submodules only if all its dependencies have been set and all of its start dependencies have been cleared. There might be some delay during the moment in time when a task acquires the 'ready for execution' status and the moment in time when the task code is effectively executed on the local worker or a remote worker. During this time window/delay the task resides in the ready task queue of its creator worker and is eligible for stealing by other workers. More than just one task may be in the 'ready state' and await execution or undergo task stealing. Task stealing by a thief worker is momentarily unavailable, e.g. disabled, in embodiments of the invention in which task stealing has been temporarily suspended for the thief worker. Tasks that have been retrieved from the ready task queue of a worker module are no longer available for stealing either.

When a task is said to be put into a pending queue in embodiments of the invention, this is a short way of saying that a pending task object is created within the pending queue as a wrapper object for that task, which pending task object comprises a reference to the task (e.g. task object identifier) and further comprises a dependency data structure for the underlying task. Similarly, when a pending task is said to be moved from the pending queue into the ready queue in embodiments of the invention, this is a short way of saying that the task object referred to by the corresponding entry into the pending queue is pushed into the ready queue, without however carrying over the dependency data structure of the pending task object that continues to reside within the pending queue. When the task has been terminated, the corresponding pending task object is removed from the pending queue of the worker module in which the task was originally created, and the termination condition is signaled to all the worker modules that still hold pending task objects with respect to tasks that have a start or stop dependency on the terminated task in their respective pending queues. The start and stop dependencies of these dependent tasks are then updated accordingly. Likewise, migration of a task in the context of a successful task stealing request only implies the migration of the task object, not the corresponding pending task object which remains in the pending task queue.

Nonetheless, it is not a strict requirement of embodiments of the invention that the wrapper object that comprises the dependency data structure (pending task object) continues to reside within the pending task queue. In alternative embodiments, the wrapper object may be transferred and stored elsewhere, e.g. in the pending queue of a non-creator node, provided that it can be found back via its corresponding task object identifier and cleared when the corresponding task has terminated.

In the context of the present invention, a task is active or alive if it has not yet been executed or still has one or more outstanding child tasks (equivalent to unresolved stop dependencies) after execution. A task is considered to be done or terminated if all its stop dependencies have been resolved.

Executing a task, in embodiments of the invention, means carrying out the instructions associated with the task's code block on suitable execution hardware. A task is said to have finished execution if all the instructions of the task's code block have been executed by the execution hardware.

Tasks of or resulting from a task-based computer program can be scheduled by the distributed task scheduler and corresponding scheduling method in accordance with embodiments of the invention, provided that data and control dependencies between tasks can be expressed in terms of start and stop dependencies, the tasks do not wait/block on results obtained from child tasks but create continuation tasks instead, the tasks do not rely on a call stack for the purpose of managing the program control flow, and the tasks do not have return statements (return address, return values). Task dependencies constrain the execution order of the tasks. Control flow dependencies like branching are amenable to regular start dependencies that are placed on a task which also contains a regular conditional statement to check whether the remainder of the task is effectively executed, possible in the form of a further sub-task. Alternatively, conditionals and/or branching statements that influence the program flow can be part of a task's code block and combined with task spawning statements. For instance, the program statements (task code block) of a parent task could read as follows:

```
        if (cond) then
           spawn (sub1)
        else
           spawn (sub2).
```

When this parent task is executed, the program statements of its code block will be executed sequentially, which includes the conditional. Depending on the evaluation of the condition, only one of the two branches is then executed. This results in either `sub1' or `sub2' being spawned as child task. At compile time the subtask to be spawned is usually unknown, but at runtime the correct part (i.e. branch) of program task tree/graph can be built dynamically.

Task outputs are stored in a global memory structure that is accessible to all compute units of the distributed computing system. Tasks may therefore fetch task input data from the global memory. As such, the tasks of task-oriented computer programs do not admit references to other tasks or callable objects e.g. in the form of task object identifiers or equivalent task descriptions) as input arguments but only accept references to memory objects that exist, at runtime, the shared global memory. This contrasts with continuation-passing style (CPS) programming languages in which CPS functions receive a continuation, i.e. a function or function pointer, as an additional argument, and the CPS function returns control by invoking this continuation argument. Program control in CPS is explicitly passed by the continuation, whereas embodiments of the invention implement task dependency data structures and dynamic task scheduling to evolve the computer program.

A commonality between tasks in accordance with embodiments of the invention and CPS functions is that the program flow can be controlled without a return address saving call/program stack. In other words, tasks are allowed to spawn new child tasks but cannot invoke other tasks, and the code block of a task in accordance with embodiments of the invention cannot rely on a program stack for the purpose of managing the program control flow. This does not exclude the possibility of providing a private stack space for each task related to different purposes, e.g. to store local variables. Furthermore, a task in accordance with embodiments of the invention may recursively create new child tasks but does not or cannot pause its execution to wait for the results of those child tasks by means of a program stack or shared registers. Instead, tasks in accordance with embodiments of the invention communicate with other tasks through the memory objects, and task code blocks are expected to explicitly create continuation tasks that operate on the results of other tasks, i.e. operate on the output objects produced by those other tasks. As compared to subroutines in conventional direct style programming models, the creation of child tasks and sibling tasks as non-callable continuation tasks in accordance with embodiments of the invention does not imply the creation of a new stack frame. Not relying on a program stack, e.g. not implementing an inter-task program stack, has the advantage that task stealing and task distribution between the different workers of the distributed task scheduler is greatly simplified. A further advantage of embodiments of the invention is that tasks are never blocking. Compared thereto, reifying program stacks on a different worker, especially when the other worker uses a different address space, is an extraordinarily complex operation. In embodiments of the invention, the distributed task scheduler is suitable for distributed computing systems that use a globally accessible, shared memory, e.g., a shared global memory. Moreover, the migration of entire program stacks across the different workers would cause an important communication and energy overhead, which can be avoided in embodiments of the invention.

In embodiments of the invention, the memory objects that were ephemerally created within the shared global memory during the time of computer program execution are typically freed, erased or overwritten once the computer program has finished. For instance, a garbage collection process may identify all the object memory objects that relate to a particular computer program through their respective OIDs, erase the contents of the identified memory objects in the shared global memory, and release or delete the OIDs of the identified memory objects from a table of currently used OIDs (e.g. as maintained by a runtime management unit and/or process).

A distributed computing network, in embodiments of the invention, is a computing platform or system for parallel computing applications, which comprises a very large number of independent computation resources that are physically distributed across many nodes and connected with one another via a network. Computation resources are available at the different nodes and include general purpose processing units and/or computer cores, which may be clustered. In non-limiting exemplary embodiments of the invention, the distributed computing network may be a supercomputer, cluster computer, cluster computer or cloud computing platform.

In embodiments of the invention, the computation resources of the distributed computing network preferably share a common address space, e.g. are coupled to a shared memory system that is a globally available resource. The shared memory system acts as the computer memory, may be accessible through the same or a different network, and may be a flat or hierarchical system. It may be centralized into a single storage device or composed of many storage units that are distributed across many storage nodes. When distributed across storage nodes, one or more of the compute nodes of the distributed computing network, e.g. all the compute nodes, may be collocated with the storage nodes.

A compute node is a scalable unit or building block for bigger compute systems like supercomputers or cluster computers. Compute nodes are replicated, typically a thousandfold or more, and assembled, e.g., into a supercomputer. A compute node contains at least one compute core and may contain additional components, such as runtime management units, object cache memory, node-local memory subsystems, object storage firewall, network interface, etc. Each compute core comprises a set of functional execution units.

In embodiments of the invention, the compute nodes may comprise one or multiple compute cores that are configured to operate on data contained in memory objects which are temporarily held in the shared global memory. The memory objects are generated dynamically as the computer program unfolds during runtime, because each one of the dynamically created tasks declares its associated input and output objects. In embodiments of the invention, the declaration of new output objects, not yet existent in the shared global computer memory, precedes the execution of the declaring task and results in the creation of a new object identifier (OID) as an object reference, which is then passed to the task as one of its arguments.

A compute core, in the context of the present invention, refers to a set of functional execution units, including but not limited to algorithmic logic units, special function units and load-store-units, which are central to the compute node. The one or more compute cores are the node resources that are effectively executing program code; they therefore accept instruction code and data to operate on. Both instruction code and data for execution by the cores are core inputs that can be accessed on the globally available, shared main memory and are stored in the form of memory objects.

Tasks related to a task-based computer program, including dynamically created tasks to be scheduled for execution on one of the compute cores of the distributed computing system, are represented as task objects, which are a particular type of objects in embodiments of the invention. Unlike memory objects (e.g. data-containing memory objects, application objects, code-containing objects), the different task objects are generally too short-lived to store them as memory objects in the shared global computer memory. Instead, the task managers sustained and running on the different compute nodes, which together may form a distributed task scheduler, typically store the task objects in their own private memory space. Hence, task objects are usually spread out over the different task managers. In embodiments of the invention, each task object holds a reference (e.g. pointer) to the task code that the task will execute, a taskID, a dependency data structure for tracking start and stop dependencies related to the task, and information about the creator node (e.g. a node ID or network address of the compute node that allows identification of the compute node on which the task was originally created).

In the context of task or workload distribution, such as task stealing, tasks may be copied from the private memory space of one task manager into the private memory space of another task manager by means of a message. Task copying includes the copying of the reference to the task code to be executed as well as including a link to the creator node, but typically excludes the copying of the dependency data structure. A copied task uses the same taskID that has been assigned to the originally created task, which is a globally unique identifier per task. The task code that the task object is referring to may be stored as one or multiple code-containing memory objects in the shared global computer memory, where it can be accessed by the different compute nodes of the distributed computing system. Alternatively, the task code that is referenced by the different task objects may be part of a larger binary resource that is shared among or copied to the different compute nodes.

In embodiments of the invention, task inputs and outputs are typically represented as application objects, which refer to one or multiple data-containing memory objects. At the memory side, each memory object, including (task) code and application objects, amounts to a distributed collection of memory fragments or memory fragment groups in the shared memory, usually a large number thereof, which is identified by a unique objected identifier. Each memory object further has a logical linear address space associated therewith, which is used to represent memory object data at the computation side, e.g. for the purpose of task execution by the compute elements of the different compute nodes. The collection of memory fragments or memory fragment groups pertaining to the same memory object can thus be distinguished by their different offsets into the corresponding logical address space. Compute resources on each compute node access memory objects linearly to retrieve memory fragments, provided they are in possession of the respective object identifiers.

Compute tasks performed by the core may include the computational processes of arithmetic calculations on data stored in memory objects as well as address calculations. In embodiments of the invention, core inputs are generally associated with a particular task, i.e. are task inputs, and can be accessed through their corresponding memory objects, e.g. by indirectly referencing memory object contents through the corresponding object identifier (OID) and logical index (offset). Memory objects may be stored in many different locations of the shared memory system, e.g. distributed across and stored in non-contiguous regions of the global shared main memory, or distributed logically or physically across a plurality of different storage units composing a shared memory system that is also distributed, e.g. a shared disaggregated computer memory. Hereinunder, the terms disaggregated memory and distributed memory are sometimes used interchangeably.

In embodiments of the invention, each compute node may comprise one or multiple CPUs that can be single-core or multi-core. In the case of having multiple cores arranged at each compute node, multiple tasks can be run concurrently on each compute node, provided their dependencies allow it. Each task could then be executed on a single core and different tasks are mapped onto different cores for execution. However, it is also possible to map each task for execution on multiple physical or virtual cores (even on a single-core machine that supports multithreaded). The executor submodule of a worker running on a particular compute node may comprise or be in command of one or multiple compute cores of that compute node.

Compared to node-local storage, which may be used to store prefetched copies of memory object fragments on the compute node and thus physically close to the compute cores, the shared or shared disaggregated memory acts as a global main memory and is accessible to and accessed by the many different compute nodes composing the distributed computing network, e.g. a cluster computer. From the perspective of each compute node, the shared or shared disaggregated main memory is acting as the working memory for that compute node. A data communication network generally separates the compute node from the shared or shared disaggregated main memory. The shared or shared disaggregated computer memory is used as non-persistent primary memory for the different compute nodes composing the distributed computing network and short-term storage of memory objects on the shared or shared disaggregated computer memory for the purpose of calculations and program execution is different from the long-term storage of data structures in file systems related to a secondary memory.

Memory objects, in the context of the present invention, refer to a format for storing and organizing information in a shared or disaggregated shared computer memory, e.g. the distributed shared memory of a cluster computer. Here, information relates to data in the broadest sense and includes, among others, compute core inputs (instructions/code, data/operands), metadata associated with the information that is stored in memory objects, tasks, higher-level instructions like subroutines and functions, or combinations thereof. Memory objects are thus a container for organizing and storing content-related information. Information is typically stored in a self-contained way in memory objects. That is, one part of each memory object is dedicated to the structured storage of content (e.g., code, data, data or code references) or references to the contents stored in other memory objects, whereas another part of the memory object is keeping a metadata structure as a description of the stored content (e.g., size of the memory object, content type, ownership data, access rights, timestamp information, object identification data).

Each memory object is also an ordered collection of non-contiguously allocated portions of computer main memory, designated as shards. A number of shards thus belong to and constitute together the memory object and, vice versa, each memory object is subdivided into a plurality of shards as basic units for memory location within the shared computer memory. Each shard of each memory object is stored at a unique location in physical main memory, preferably a disaggregated memory system, which is indicated by a physical memory address in a physical address space. That is, from the main memory perspective, the physical addresses of the fragments a memory object is composed of are preferably scattered across the physical address space associated with the computer main memory, e.g. a distributed main memory. Moreover, each shard of a memory object comprises a sequence of fragments as smaller subunits. It is thus also true that each memory object consists of a plurality of fragments. Fragments of memory objects are defined as the basic unit of information that the compute cores of the compute node grasp in response to memory access commands (e.g. read and write commands). The size of memory object fragments is at least equal to the word size of the compute cores in the compute node, but generally are larger than the compute core's word size, e.g. is a multiple of the word size. However, compute cores use an alternative addressing scheme (i.e. compute core representation of the memory object) when requesting access to memory object fragments. From the compute core perspective, each memory object appears as a single contiguous block of memory that is subdivided into fragments. A logical address space is associated with the memory object as abstracted memory resource, in which the fragments are linearly referenceable through an offset. In consequence, the memory addresses of fragments have to translated between the logical address space of the memory object and the corresponding physical address space of the main memory, e.g. the distributed shared memory, every time an exchange of memory object information is taking place between the compute node core(s) and computer main memory, e.g., during a memory access operation such as load/store operations. This underlying translation of fragments' memory addresses is performed by a memory object management unit and is completely hidden from the compute cores. Although bearing some resemblance with virtual memory architectures, the logic address spaces for portions of computer memory are implemented on a per-object basis instead of a per-process basis and compared to segmented or paged virtual memory resources, memory object fragments and shards are not continuously referenceable in main memory but optimized for uniform distribution across the physical address space.

Memory objects further have an object identifier (OID) assigned to them, so that one can distinguish between the different coexisting memory objects. Moreover, the fragments of memory objects may be grouped into larger context-related structures such as chunks or nested chunks, e.g. separate chunks for metadata, code and data. A chunk of a memory object is defined as a logical partition of the logical address space associated with the memory object. The chunk of a memory object typically counts many different fragments.

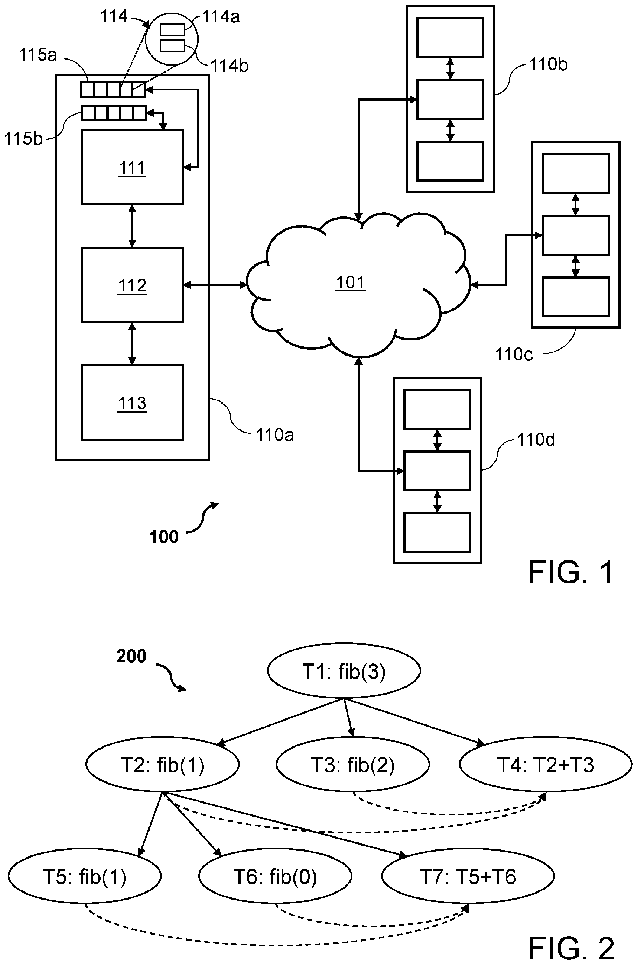

Referring to FIG. 1, a distributed task or work scheduler 100 for a distributed computing system is shown. The task scheduler 100 comprises a collection of workers 110a-d that are configured to run in parallel on a distributed hardware cluster. A network 101 interconnects the different worker modules 110a-d, which allows point-to-point communication and message exchange between any pair of worker modules. Furthermore, each worker 110a through 110d of the distributed task scheduler 100 comprises at least the following submodules: a manager or manager submodule 111, a message channel 112, and an executor or execution submodule 113. The message channel 112 operatively connects the manager submodule 111 to the executor submodule 113 of each local worker (e.g. worker 110a) and further to the manager submodules of any remote worker (e.g. workers 110b-d) via the communication network 101. Any message sent between the manager 111 and the executor 113 is handled by the channel 112.

Each worker 110a through 110d can be implemented as a software module, a hardware module or a hybrid module on a corresponding compute node of the distributed computing system. In a hybrid module, the running of software (e.g. compute node firmware for the worker) is supported by dedicated hardware components. If in embodiments of the invention the worker modules are fully or partly implemented in software, dedicated runtime management (RTM) hardware units which take care of the execution of this software are preferably provided (e.g. integrated or installed) on the different compute nodes of the distributed computing system.

The manager 111 of each (local) worker is configured to perform at least the following actions:
∘ create tasks dynamically in a parent-child relationship, thereby enabling the decomposition of a computer program into a plurality of tasks at runtime;
∘ add dependencies to the created tasks to constrain an execution order thereof, including the addition of stop dependencies for parent tasks with respect to newly created child tasks and the addition of start dependencies for sibling tasks that are subject to the prior execution of at least one other sibling task;
∘ track the dependencies of the tasks that were created by the manager 111, regardless of the task locations at a later moment in time, e.g. the dependencies are also tracked for a task that has been moved to a remote worker and therefore no longer resides on the local worker;
∘ change a status of the created tasks from 'pending' to 'ready for execution' if their respective start dependencies have all been resolved;
∘ send tasks having the 'ready for execution' status through the message channel 112 to the executor 113;
∘ issue a task stealing request to a remote worker if none of the tasks present in the local worker has the 'ready for execution' status;
∘ accept migration of a task from the remote worker module, referred to as the stolen task, in response to the task stealing request, provided that the stolen task has the 'ready for execution' status.

The decomposition of the computer program into a plurality of tasks is a global process to which usually all the workers will contribute eventually. This is a consequence of moving tasks between pairs of workers in the event of successful task stealing requests and the allowing the migrated tasks to spawn child tasks at their new locations. The task creation actions of all the worker module managers of the distributed task scheduler have the combined effect of gradually constructing a rooted tree structure during runtime - the dynamic task tree for the computer program. A root node of the dynamic task tree represents the launching of the computer program as the initial task, e.g. the main task to be divided into a plurality of smaller tasks, and each further tree vertex or node represents one of the subsequently created tasks. A parent task thus always has a corresponding parent node in the task tree and the spawning of child tasks by the parent tasks corresponds to appending further child nodes (in the form of leaf nodes) to the common parent node of the tree structure. If a parent node has more than just one child node in the task tree, the further child nodes are referred to as siblings. By analogy, child tasks originating from the same parent node are considered to be siblings or sibling tasks. Each task that is represented by a node of the dynamic tree structure refers to a unit of computation work to be mapped to an execution hardware unit owned or controlled by one of the executor submodules 113 of the distributed task scheduler 100. It is typical for dynamic and irregular computational problems that their corresponding task trees are not known or impossible to plan in advance, such that the task tree structures for the corresponding computer programs cannot be obtained statically at launch time but have to be built dynamically at runtime. Trees are a special class of directed acyclic graphs, in which each node except the root node has exactly one parent node.

The pending queue 115a of each worker holds a list of pending task objects, which are wrapper objects for the task objects in the 'pending' state. Each pending task object 114, when created in the pending task queue 115a, is supplemented with a data structure that holds the dependencies of the underlying task. The dependency data structure of a pending task object 114 may comprise a set of counters 114a and 114b, respectively counting the number of start dependencies and stop dependencies pertaining to each active task. A task is active as long as it has not been terminated, i.e. as long as the task has not been executed or still has outstanding and unfinished child tasks. The dependencies are not known upfront by static analysis of the program but become known when the program is run. The manager 111 may add a start dependency to a task by incrementing a start dependency counter for this task and remove a start dependency by decrementing the corresponding counter. Similarly, the manager 111 may add a stop dependency to a task by incrementing a stop dependency counter for this task and remove a stop dependency by decrementing the corresponding counter. A task is free of any start dependency, e.g. if the corresponding start dependency counter equals zero, all the start dependencies are said to be resolved for this task. Idem for the task stop dependencies. Counters are simple way of keeping track of a task's unresolved dependencies.

In embodiments of the invention, the execution order of the created tasks is constrained and controlled by the start and stop dependencies, which are task attributes that are managed and tracked by the manager of each worker module. The manager 111 may be configured to create and manage a dependency data structure in respect of each one of its created tasks, which dependency data structure is used to hold and track the corresponding dependency counters. More specifically, the dependency data structure is created with respect to the task object which encapsulates the task. The dependency data structure may be linked to a particular task object by reference to its identifier. Dependency tracking by the manager 111 may be stopped for a task, and the corresponding dependency data structure released or destroyed, when the task has terminated. Rather than being an independent object, the dependency data structure is a local structure that is owned by its creator, i.e. the manager submodule that created the data structure and the corresponding task. Therefore, the dependency data structure resides within the creator manager submodule until it is destroyed, regardless of whether the corresponding task stays on the same worker module or is moved to some remote worker module. This means that the managers of the different workers have to inform each other about stolen tasks which have been executed by an executor submodule of another worker than the worker whereon the task was originally created.

When a parent task is spawning a child task in accordance with embodiments of the invention, the stop dependency counter of the parent task is incremented by one count and a reference to the parent task, e.g. the task identifier, is preferably retained in the dependency data structure of the spawned child task. This way, the parent task will get notified upon completion of the child task and the stop dependency counter for the parent task will be decreased by one count. This equally applies to parent tasks which are themselves child tasks. Furthermore, the start dependency counters of a freshly created child task is set to the number of sibling tasks it depends on and a reference to the freshly created child task, e.g. the task identifier, is preferably retained in the respective dependency data structure associated with each one of said sibling tasks. This way, a child task that is subject to the prior execution of one or more of its sibling tasks will get notified upon completion of the one or more of its sibling tasks and the stop dependency counter for the child task that is subject to the prior execution of the one or more of its sibling tasks will be decreased accordingly.

The managers of the worker modules are responsible for keeping track of the dependencies of all existing tasks, as well as of all the references to tasks that will require notification if another related task (e.g. child or sibling) has completed. To this end, the managers 111 of the worker modules are configured to listen to the channels 112 for incoming messages from the corresponding executors 113, in particular messages containing task creation requests, requests for addition of task dependencies, and task execution confirmations. To avoid data race conditions, the managers of the worker modules also enforce the rule that a created child task cannot be scheduled for execution until all its siblings have been created. This means that the child task remains in a pending status until all its siblings are created successfully. Enforcement of this rule can be achieved by appropriate language constructs of the programming model and checked by the compiler.

With reference to FIG. 2, a runtime task tree 200 obtained by dynamically decomposing a computer program for determining Fibonacci numbers into smaller tasks is now described. In the figure, solid arrows represent task spawning actions of a parent task, and dashed arrows represent start dependencies between sibling tasks. Stop dependencies on the child tasks are not shown separately for the parent tasks but would concur with the inverted direction of the solid arrows. The recurrence relation for obtaining the n^{th} number of the Fibonacci sequence can be expressed through the function 'fib' in the following piece of pseudocode: 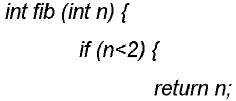 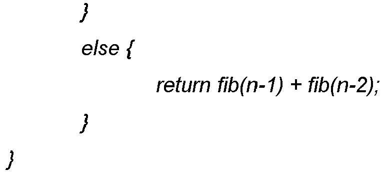 The depicted runtime task tree 200 corresponds to the case n = 3. Calculating the function value fib(3) constitutes the main task `T1' in this example, which corresponds to the root node of the task tree. The function definition of fib(3) recursively calls fib(2) and fib(1), which can be computed concurrently and asynchronously with respect to the main task `T1'. The function calls fib(2) and fib(1) are said to be concurrent sections of the user program and cause the main task 'T1' to spawn two child tasks `T2` and `T3', respectively. Moreover, adding the outcomes of fib(2) and fib(1) constitutes a continuation task `T4', which is created as a sibling of `T2' and `T3', since parent tasks do not suspend and wait for return values in embodiments of the invention. If tasks produce output values in embodiments of the invention, these output values are stored as immutable objects in a globally accessible, shared memory.

As the execution of task `T4' is not allowed to start before the execution of its two sibling tasks `T2' and `T3' has ended, start dependencies with respect to these sibling tasks have been added to task `T4' to ensure the correct execution order. A start dependency counter for task `T4' may initially be set to two. When sibling tasks `T2' and `T3' complete, the pending task `T4' is notified, and the respective start dependencies will again be removed from task `T4'. Accordingly, the start dependency counter for `T4' may be decreased back to zero. At this point, all the start dependencies of task `T4' have been resolved and the task `T4' is ready for execution.

Moreover, stop dependencies with respect to all three child tasks `T2', `T3' and `T4' are added to the main task `T1'. A stop dependency counter for task `T1' may initially be set to three. The execution of the main task `T1' may end as soon as all its child tasks `T2', `T3' and `T4' are created and all the start and stop dependencies pertaining to these child tasks registered. Nonetheless, the main task 'T1' will not be completed until all its child tasks `T2', `T3' and `T4' have been executed and completed in turn. Each time one of the child tasks `T2', `T3' and `T4' completes, the main task `T1' is notified, and the corresponding stop dependency counter is reduced by one count. Eventually, the stop dependency counter for task 'T1' will reach zero, at which point the main task `T1' is allowed to terminate.

In embodiment of the invention, tasks of the task tree that are represented by leaf nodes do not have stop dependencies and are terminated when they have finished executing. In the exemplary task tree of FIG. 2, this applies to all tasks except for `T1' and `T2'. Parent tasks cannot be represented by leaf nodes and therefore do not terminate immediately after their execution has finished. Instead, parent tasks `T1' and `T2' terminate as soon as all their stop dependencies have been resolved. In embodiment of the invention, a child task that terminates triggers the removal of the corresponding stop dependency for its parent task. For instance, the stop dependency with respect to child task `T5' will be removed for the parent task `T2' upon termination of the child task 'T5'.

In the exemplary runtime task tree 200, the execution of tasks `T3' and `T4' does not require any further recursive function call so that the corresponding tree nodes for these tasks are leaf nodes. For leaf nodes, a stop dependency count remains zero throughout the task's lifetime. In contrast thereto, executing task 'T2' will result in the two function calls fib(1) and fib(0), causing the creation of the respective child task 'T5' and `T6'. As for the previous task `T4', the output values for the two functions calls fib(1) and fib(0) need to be summed in a further sibling task, `T7', which therefore includes start dependencies with respect to tasks 'T5' and `T6'. Once the three tasks `T5', 'T6' and `T7' have been created and their dependencies registered, the execution of the parent task 'T2' may end. Nonetheless, the task 'T2' will not be completed until all its child tasks `T5', 'T6' and `T7' have been executed and completed in turn, e.g. not until its associated stop dependency counter will reach zero. In the example, the tasks `T5', 'T6' and `T7' do not invoke any further functions so that the tree nodes corresponding to these tasks are leaf nodes. The final result, i.e. the value of fib(3), can be retrieved from the immutable object in the globally shared memory that holds the output value of task `T4'.

Referring back to FIG. 1, each worker module 110a-d may further comprise a first and a second task queue 115a, 115b in operative communication with the respective manager submodule 111. The first task queue 115a is configured to support enqueuing and dequeuing of tasks whose status is 'pending', whereas the second tasks queue 115b is configured to support enqueuing and dequeuing of tasks whose status is 'ready for execution'. In consequence, the first and second tasks queues are task status-dependent queues and may also be referred to as the pending queue 115a and the ready queue 115b. Preferably, the ready queue 115b is implemented as a double-ended queue or deque, thus allowing the pushing of more recent tasks with the 'ready for execution' status on one end of the deque and the popping of older tasks with the 'ready for execution' status from the other end of the deque. The pending queue 115a may be implemented as a single-ended or double-ended queue; the order in which pending tasks are stored in the pending queue is irrelevant. A map can be used to retrieve a pending task object through its corresponding task identifier from the pending queue. The two task queues 115a, 115b may be software queues, hardware-supported queues or hardware-implemented queues with a properly designed interface for communication with the manager 111. In embodiments of the invention, the manager 111 has exclusive access to the task queues 115a, 115b.

The manager 111 of each worker is further configured to change the status of a task residing in the pending queue 115a from 'pending' to 'ready for execution' and initiate the transfer of the task to the ready queue 115b if all the start dependencies for this task have been resolved. Tasks residing in the ready queue 115b are available for execution by the executor 113 or migration to a remote worker when accepting a task stealing request.

The manager 111 of each worker is further configured to access the channel 112 for sending tasks having the 'ready for execution' status to the executor 113 if at least one execution hardware unit comprised or controlled by the executor 113 is idle and change an execution status variable from 'idle' to 'running'. In embodiments of the invention in which the executor submodule of a worker comprises or controls more than just one execution hardware unit for the execution of tasks, the manager submodule of that worker may be configured to select the execution hardware unit of the executor on which the task shall be executed. In such embodiments, the manager submodule marks the execution status of each execution hardware unit separately as `idle' or 'running'. Additionally, the manager submodule may access the channel for sending several tasks having the 'ready for execution' status to the executor, provided a corresponding number of execution hardware units comprised or controlled by the executor are marked as 'idle'.

In embodiments of the invention, the manager submodule can be implemented either as a software process, which may be hardware supported, or as a hardware unit adapted to run such software process, e.g. comprising or receiving instructions which cause the hardware unit to perform the software process. Furthermore, a manager submodule of a distributed task scheduler in accordance with embodiments of the invention may be configured for booting and indefinitely running a scheduling loop (endless loop). The scheduling loop may cycle through the following steps:
∘ accessing the channel and checking for messages from the executor submodule or the manager submodule of another worker;
∘ responding to the messages retrieved from the channel and, if the message is demanding an appropriate action, performing this action (this includes the updating of task dependencies);
∘ checking whether a task residing on the worker has the 'ready for execution' status, e.g. by checking whether tasks are present on the ready queue;
∘ if a task having the 'ready for execution' status is present, accessing the channel to send this task to the executor submodule;
∘ launching a task stealing attempt if none of tasks managed by the manager submodule has the 'ready for execution' status, e.g. if the ready queue is empty, and the task stealing is not temporarily suspended.

The channel 112 may be implemented as a message passing channel, which enables and manages the communication process through message exchange between the manager 111 and the executor 113, as well as the message exchange between the managers of different worker modules via the inter-channel network 101. In embodiments of the invention, the communication channel may include one or more message queues (in hardware, hardware-supported software or software). The use of a separate communication channel lowers the processing burden on the manager and executor submodules with regard to message handling and makes the distributed task scheduler more robust against the temporary failure, unavailability (e.g. going offline), or denial of service of some of its submodules. Task-related or dependency-related messages are not inevitably lost under these circumstances. Moreover, as opposed to some direct communication strategies, the decoupling of the manager submodule from the executor submodule through the channel can prevent stalling. In some embodiments of the invention, the messaging activity through the channel can be monitored, e.g. by tracking the activity or free capacities of the message queues, and the monitoring result can be used to trigger the addition or removal of auxiliary execution hardware units comprised or controlled by the executor submodule. This improves the scalability and flexibility of the distributed task scheduler in response to varying workloads.

The inter-channel network 101 may be a dedicated communication network for interconnecting the different worker modules 110a-d of the task scheduler 100, which are distributed across the many compute nodes of the distributed computing system. Alternatively, an existing communication network of the distributed computing system, e.g. a private or public network for data exchange between the compute nodes and/or access to the shared global memory, may be used to enable communication between the worker modules.

In embodiments of the invention, the inter-channel network that interconnects the different worker modules and/or the communication network that interconnects the different compute nodes of the distributed computing network/system may be local network or a wide area network, which uses commonly known network technologies such as Ethernet, FC, and InfiniBand for supercomputers.

The executor submodule 113 of each worker module is configured to receive tasks having the 'ready for execution' status from the messaging channel 112 and execute said tasks on task execution hardware comprised or controlled by the executor submodule 113. The executor 113 of each worker may comprise more than just one execution hardware unit on which the code blocks of the scheduled ready tasks are executed, e.g. multiple redundant execution units for multithreaded execution. General-purpose processors or CPUs, or dedicated processing units like GPUs may be used as execution hardware units. Similarly, it is possible to have multiple executor submodules operatively coupled through the message channel to the manager submodule. In this case, the manager submodule determines which one of the executor submodules currently indicates an 'idle' state and sends a task in the 'ready' state over the message channel to the unoccupied executor submodule. Tasks are always sent dynamically to one of the multiple executor submodules and no static mapping of tasks to executor submodules is used. Furthermore, the executor submodules of the distributed task scheduler in accordance with embodiments of the invention may be configured for booting and executing a process which continuously loops through the following steps (forming an endless loop):
∘ accessing the channel and checking for incoming messages regarding tasks to be executed;
∘ executing the task associated with an incoming message, by executing its code block(s) on an execution hardware unit comprised or controlled by the executor submodule, and subject to the task's code block contains instructions to generate task-related messages, accessing the channel to send said task-related messages to the manager submodule;
∘ accessing the channel to send a confirmation messages to the manager submodule, confirming that the execution of the task's code block(s) has finished on the execution hardware unit.

In the preceding endless loop executed by the executor submodule, the task-related messages may relate to one or more of the following requests:
∘ requesting to create a new task and related task object, e.g. in the event that a running parent task instructs the spawning of a child task;
∘ requesting to place a start dependency on a specific child task that is subject to the prior execution of another child task (sibling);
∘ requesting to place a stop dependency on a specific parent task;
∘ requesting to schedule a created task.

A task creation request may take a fraction of user code, e.g. a part of the parent's code block, and a parameter list (e.g. references to input/output data of objects stored in the globally accessible shared computer memory) as message inputs and expect the return of a unique identifier for the new task. The task creation request is dealt with by the corresponding manager submodule and may be a blocking operation. The latter means that the parent task in the course of execution does not progress until the executor submodule receives a confirmation from the manager submodule that the requested child task has been created successfully, e.g. confirmation in the form of a new task identifier.

A request for the addition of a start dependency can be expressed in user code and expects the task identifiers of the targeted sibling task and the source sibling task as message inputs. Here, the target sibling task refers to the sibling task whose start dependency count needs to be increased, whereas the source sibling task refers to the sibling task that caused (i.e. is the source) of the start dependency. The target sibling task is subject to the prior execution of the source sibling task and the target sibling task is notified about the completed execution of the source sibling task, in order to have its associated start dependency counter decreased. The manager submodule deals with this request by incrementing the start dependency counter of the dependency data structure that is associated with the target sibling task and includes a reference to the target sibling task in the dependency data structure of the source sibling task for the purpose of notification following execution. Preferably, the code the manager submodule executes to add a start dependency is an atomic operation and cannot be interrupted. No return values are expected for this type of request and sending this request is a non-blocking operation for the executor submodule.

A request for the addition of a stop dependency can be expressed in user code and accepts the task identifiers of a child task and its corresponding parent task as message input. This request is typically triggered after successfully requesting the creation of the child task. The manager submodule deals with this request by incrementing the stop dependency counter of the corresponding parent task and includes a reference to the parent task in the dependency data structure of the child task for the purpose of notification following execution. Preferably, the code that the manager submodule executes in order to add a stop dependency is atomic and cannot be interrupted. No return values are expected for this type of request and sending this request is a non-blocking operation for the executor submodule.

User code may also include statements that cause the executor submodule to issue a request for task scheduling. This request accepts the identifier of the task to be scheduled as input and instructs the manager submodule to place the task object for the previously identified task on the appropriate task queue, viz. the ready task queue if all the start dependencies for the task to be schedules have been resolved and the pending task queue otherwise, and to start tracking its dependencies. No return values are expected for this type of request and sending this request is a non-blocking operation for the executor submodule. Once placed on the appropriate task queue in response to a task scheduling request, the user gives up control on the location and timing of the task's execution; from that moment onwards, the distributed task scheduler is in charge of the dependency management and dynamic work load distribution (task migration).

In general, the executor submodule issues a confirmation message to notify the associated manager submodule when the code block(s) of a scheduled task have finished executing on one of its execution hardware. The task identifier for the task of concern is included in the confirmation message. No return values are expected for this type of request and sending this request is a non-blocking operation for the executor submodule. The confirmation message allows the manager submodule to check unresolved dependencies related to the executed task, e.g. decreasing the stop dependency count of the task that is parent to the finished task, provided the finished task has no outstanding children, and decrease the start dependency count of any sibling task that is subject to the successful completion of the finished task. In response to the confirmation message, the manager submodule may also change its execution state variables from 'running' to 'idle'.

In embodiments of the invention, additional task queues may be defined in software and/or hardware, such as a further queue for created tasks, which holds tasks that have been created but not yet released for scheduling by the (distributed) task scheduler, a queue for running tasks (e.g. currently executing tasks) and a queue for tasks that have finished executing (e.g. tasks that are done). Tasks may have been created but not yet scheduled, e.g. not yet moved to the pending/waiting or ready task queues, if other sibling tasks still have to be created, which would modify the initial counters for the number of start and/or stop dependencies. Created task may be placed on the appropriate task queue 115a or 115b, depending on their start dependency count, by a corresponding `ScheduleTask' message to the task manager. For instance, a parent task currently under execution may send a 'ScheduleTask' request/message to the task manager 111 once all the sibling tasks have been created. Scheduled tasks in the ready task queue may be sent to available execution hardware by the task manager at any moment. This means that the corresponding task object may be placed onto the running task queue while the task code referred to by the task object is fetched and passed to the executor 113 for execution. As soon as the task code has completed execution, the task manager may move the corresponding task object from the running task queue to the finished/done task queue. The executor 113 may send a 'TaskDone' message to the task manager 111 to this effect. In embodiments of the invention, the manager 111 generally has exclusive access to the task queues, e.g. the pending and ready task queue 115a, 115b. The pending and ready task queues may be implemented explicitly, e.g. as hardware queues, whereas the created task queues, the running task queues and the finished task queues may be implemented implicitly (e.g. via the existence of a non-empty dependency data structure in the pending task queue, the validity of a task code reference in the task object or a running/run flag in the task object, etc.).

Task stealing is an efficient way to distribute tasks across the workers that are implemented on the different compute nodes of the distributed computing system, e.g. supercomputer, cluster computer or grid computer. Load-balancing is achieved by letting workers without tasks having the 'ready for execution' status, which do not contribute to the progression of the compute problem, steal tasks from other workers, provided the to be stolen task has the 'ready for execution' status. Distributed computing systems with globally accessible, shared computer memory do not put any restrictions as to where a 'to be stolen task' can be moved. The worker module residing on any one of the compute nodes has access to the shared computer memory. This does not preclude the possibility of prefetching of compute data from the globally available shared computer memory into caches or cache-like structures (e.g. memory subsystems) of the compute nodes whereon the stolen task resides, whereby locality of data is further improved.

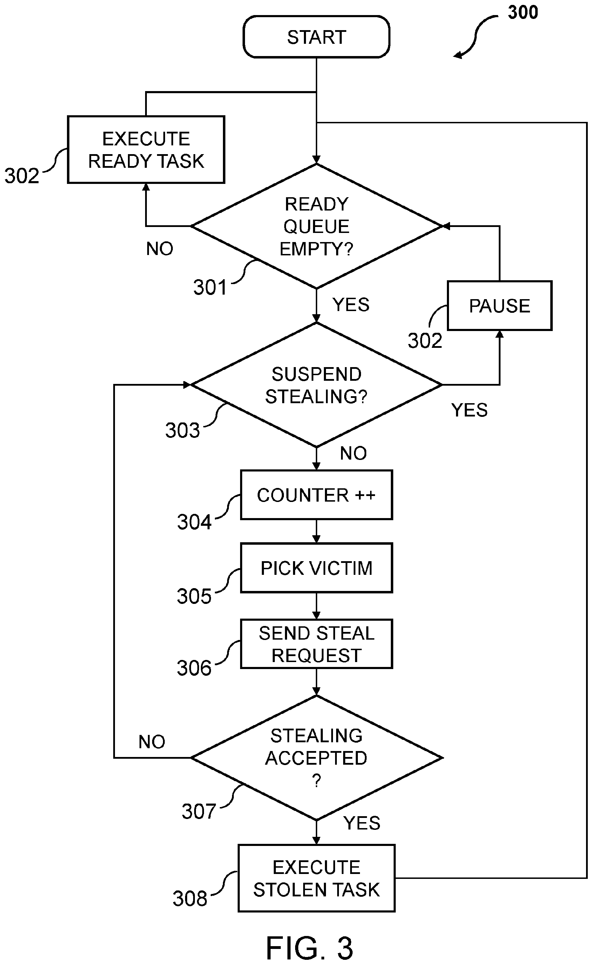

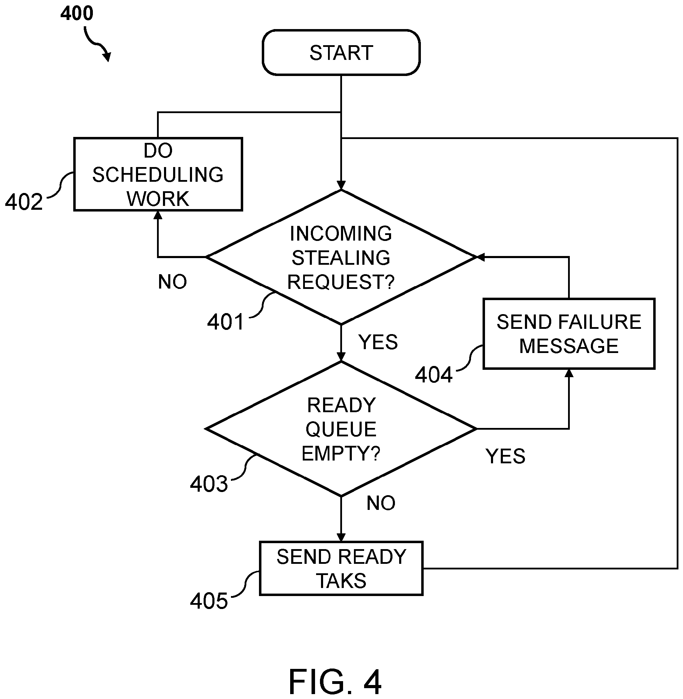

With reference to FIG. 3 and FIG. 4, task stealing 300, 400 in accordance with embodiments of the invention is now described. The manager 111 of any local worker that detects in step 301 that none of its created and still existing tasks has the 'ready for execution' status, e.g. upon detecting an empty ready queue 115b, accesses the channel 112 to issue a task stealing request to a remote worker over the network 101 in step 306. This remote worker - the 'victim' - is preferably randomly picked in a preceding step 305. Nonetheless, task stealing from a specific worker may be requested in alternative embodiments, for example when the distributed task scheduler provides a monitoring unit that provides the manager of each worker, regularly or upon request, with an activity status report of all the other workers. The manager that is launching a task stealing attempt in step 306, e.g. the `thief' manager, changes a stealing status variable from 'non stealing' to 'currently stealing' (not shown in FIG. 3) and may directly continue executing a scheduling loop which listens to messages arriving on the channel (i.e., sending a task stealing request is a non-blocking operation). While the thief manager is in the 'currently stealing' status, launching a further task stealing request is prohibited. This avoids synchronization problems with regard to previous task stealing requests and avoids flooding the network 101 with task stealing requests. It also prevents the thief manager from receiving too many tasks that cannot be coped with in a reasonable amount of time.

Each manager is configured to access its associated channel and listen to incoming task stealing requests from the managers of the remote workers in step 401. Therefore, the victim manager responds to the task stealing request from the thief either by sending a task stealing failure message in step 404 or by accepting the stealing request and transferring the to be stolen task in step 405, depending on whether its own ready task queue is empty at the moment of receiving the task stealing request. An empty state of the ready task queue is checked in step 403. If the victim's ready queue is not empty, preferably the oldest task residing in the ready queue is popped and transferred to the thief manager, e.g. in step 405. This is because older tasks are more likely to be tasks that represent a larger unit of work, e.g. work that requires more computational effort. The victim manager includes the stolen task into a remote task message that is sent back to the thief manager over the channel network 101. The remote task message also contains the victim manager's network address so that the thief manager can notify the victim manager of the finished execution of the stolen task. This notification is usually needed for the correct tracking and updating of the dependency data structures that remained on the victim worker and refer to the stolen task. When no incoming task stealing requests are received by the victim manager, e.g. during the listening step 401, other scheduling work is performed in step 402, e.g. a scheduling loop continues running. In embodiments of the invention, the manager submodule processes messages one at a time in a synchronized manner; if multiple thief workers simultaneously target the same victim worker, their task stealing requests are thus processed sequentially in a conflict-free manner. Furthermore, it may occasionally happen that the victim worker is itself in a stealing state while receiving a task stealing request. In this case the same rules apply: if there is no 'ready' task present in the victim's ready queue - the most probable scenario, then the victim worker responds with a stealing failure message and the stealing request fails, else the victim worker initiates the migration of a 'ready' task that resides in in the victim's ready queue, even if the victim has itself an outstanding stealing request.

Upon reception of the response from the victim manager in step 307, the thief manager changes the stealing status back to 'not stealing'. If it is the case that the victim manager responded by transferring one of its own 'ready for execution' tasks, referred to as the stolen task, then the thief manager proceeds with sending the stolen task over the channel to its associated executor for having the stolen task executed immediately in step 308. It may happen that the executor of the thief worker is no longer unoccupied because it received a scheduled task to be executed whilst the victim manager was awaiting a response to the task stealing request. For instance, the thief manager may receive information related to the completion of a first sibling task which causes a second sibling task, subject to the prior execution of the first sibling task and residing on the thief worker, to have its status changed from 'pending' to 'ready for execution', all while the thief worker has the 'currently stealing' status. This situation can only occur if the thief worker owns pending task objects for tasks that are stolen, is currently lacking work and issues a steal request. In such a case, and provided that no further execution hardware unit of the executor is available, the stolen task may be temporarily placed on a stolen task queue or similar storage facility, which is different from the ready queue. This avoids the repeated stealing of the already stolen task. Repeated stealing may be permitted in some embodiments of the invention but is avoided in preferred embodiments of the invention due to the communication overhead and possibly indefinitely delayed execution of the stolen task. The latter is more likely to happen in the early phase of tackling the computation problem and decomposing the task-based computer program into smaller tasks, during which a large fraction of the workers of the distributed task scheduler is still waiting for work. Preferably, the execution of stolen tasks put on the stolen task queue of a thief worker is prioritized such that the stolen task is executed as soon as the execution hardware unit of the executor is again marked as 'idle'.

In embodiments of the invention, the manager submodule of a thief worker receiving a stolen task preferably creates a local pending task object for local dependency management of the stolen task, e.g. in the pending task queue of the thief worker. However, this pending task object will be marked as a 'stolen' task (additional attribute). So, when the stolen task is executed and its stop dependencies resolved, the thief's manager submodule is informed that it has to forward this termination information to the originator of the stolen task. The victim manager submodule still has the original pending task object for its own local dependency.

In preferred embodiments of the invention, the distributed task scheduler is adapted to prevent any congestion or flooding of the communication network by an overwhelming number of issued task stealing requests. To achieve this, a thief manager is configured to count the number of task stealing requests that were issued in a row or determine the average number of task stealing requests that have been issued over a predetermined period of time in step 304, e.g. a moving average. Both successful and unsuccessful task stealing request may be considered, or else only unsuccessful task stealing request are considered in the counting process 304. Other suitable measures for the frequency of issuing task stealing requests may be formulated by a person skilled in the art. Prior to issuing a new task stealing request, the thief manager then compares the counted number or any equivalent measure of previously issued task stealing requests to a predetermined threshold value, e.g. an allowed maximum number or average frequency of issued task stealing requests. A condition for suspending the task stealing in step 303 is met, and the thief manager pauses the issuing of task stealing requests for fixed pausing time in step 302, if the predetermined threshold value is exceeded as a result of the preceding comparison. Otherwise, no suspension of task stealing requests is triggered. The thief manager may set a state variable to 'stealing suspended' to avoid comparison with the threshold value during the pausing time. When the pausing time has lapsed, the count of task stealing requests is reset and the thief manager may change the state variable to 'not stealing' until a new stealing attempt is launched.

The executor 113 comprises hardware for executing the instructions associated with the respective tasks. A task may comprise, e.g. in its body part, pieces or segments of user code in a machine-executable or interpretable form, also called code blocks, which constitute a single unit of computational work and are referred to as the task's instructions. Scheduling tasks for execution in accordance with embodiments of the invention thus includes the step of mapping the task's instructions to an execution hardware unit of one of the executors 113 of the distributed task scheduler 100. Execution hardware owned or controlled by the executor 113 of each worker module 110a-d may comprise one or multiple distinct processors, compute elements or compute cores, e.g. distinct compute cores of a multicore CPU or compute elements of a GPU.

In embodiments of the invention, the distributed task scheduler is preferably initialized in a predetermined order, e.g. in accordance with a bootstrapping method. The boot method may comprise the following steps:
∘ starting a manager thread and executor threads in each worker: the manager thread for executing the scheduling loop of the manager submodule and the executor threads for executing the task code;
∘ initializing scheduling data structures by each manager thread, including the scheduling data structure for the ready task queue (initially empty), the pending task queue (initially empty), the stolen task list (initially empty), the stealing state and counter, the stealing suspended state, the list for storing network addresses of the worker's executor submodules, and the list for storing network addresses of all the remote workers (when indirectly addressing the manager submodules via the worker interfaces) or at least the manager submodule of all the remote workers (when directly addressing the manager modules);
∘ launching the endless scheduling loops in the workers' manager threads;
∘ launching the executor threads of each worker and communicating the network addresses of the executor threads via message passing to the corresponding manager threads for registration;
∘ communicating the network addresses of each manager thread to all the other workers of the distributed task scheduler (e.g. via broadcasting, or discovery in a p2p network);
∘ launching a user program to be run on one of the workers, e.g. via a loader program, thereby creating the initial task for bootstrapping (user) application execution;
∘ optionally adding more workers on the fly.

The present invention also relates to a distributed computing system comprising the distributed task scheduler or adapted for implementing the dynamic task scheduling method of the previous aspects. The distributed computing system, e.g. a multi-node multiprocessing computer for high-performance computing applications such as a supercomputer, cluster computer or grid computer, comprises a plurality of compute nodes that are operatively coupled to a globally accessible and shared computer memory. The compute nodes have the advantage of being highly scalable base units for assembling a supercomputer. Here, multiprocessing relates to the parallel execution of more than one computer program, e.g. application processes or user programs, and the resources required therefor. Each process may create one or multiple threads, which are smaller executable entities related to the process that typically share the same memory resources. Moreover, a task typically refers to a unit of work being executed, whereas a process rather specifies what needs to be done, independently of it "being done" right now. In embodiments, a small operating system may be provided that performs thread handling (e.g. FreeRTOS). The different worker modules (i.e. workers) are implemented on respective ones of the plurality of compute nodes. To this end, each compute node may provide the necessary hardware support for the worker processes. For instance, each compute node may comprise a runtime management (RTM) hardware unit as hardware implementation of the worker module or as the hardware which supports the running of the worker module on this compute node.

In the distributed computing computer, the multiple compute nodes and storage nodes of the shared computer memory are operatively connected through a communication network, i.e., form a set of interconnected network nodes. The communication network typically comprises a node-internal communication subsystem, e.g. a network-on-chip, and an inter-node communication subsystem, e.g., ethernet network and/or optical fiber communication network. The compute nodes and storge nodes all have a network interface module and can be addressed by a portion of the network address. Node-internal components can all be reached via full network addresses.

The shared memory is globally available, meaning that it can be accessed by each compute node, and has a common address space that is shared by all the compute nodes. The shared computer memory may be a distributed or aggregated computer memory, e.g. a collection of many different memory modules that act as a single memory for computation purposes. The distributed computer main memory may be provided by a plurality of storage nodes that each comprise at least one memory unit for distributed memory object storage, e.g. DRAM-based or SSD-based memory modules. The plurality of storage nodes may be distributed over a plurality of locations, i.e., form a computer main memory that is decentralized. Access to the distributed memory units can be controlled independently for each storage node by a local memory controller. In particular embodiments of the invention, the memory units composing the disaggregated computer main memory are all assembled into the compute nodes of the computing system and the compute nodes also act as storage nodes. In such embodiments, each compute node may contain at least one memory unit as a fraction of the global disaggregated computer memory. In other embodiments of the invention, the storage nodes of the computing system are different from the compute nodes. In yet other embodiments, the disaggregated computer memory of the computing system may be composed of a mix of independent storage nodes with dedicated memory units and compute nodes that also act as storage nodes (e.g. integrating a memory unit of the global distributed store).

In contrast to the memory management techniques and related memory management units used by conventional computer processors, processing units, compute cores, and execution hardware units of embodiments of the present invention are configured to reference and access information, i.e. computer memory contents, as fragments of memory objects. From the perspective of the tasks and threads executing program code on these units, the memory objects are represented as contiguous blocks of memory in a logical address space to which the tasks or threads have direct access, provided the granted access rights allow to do so. The contiguous block of memory associated with each memory object is subdivided into a plurality of linearly addressable fragments, thus forming a logical address space for information retrieval by the compute core executing the tasks. Logical memory addresses of fragments accommodated in the memory object do have a physical counterpart; the logical memory addresses are mapped onto corresponding physical addresses that reference locations in main memory. As opposed to virtual memory, memory objects are not exclusively linked to processes. In fact, a process can create multiple independent memory objects. A memory object may be created as an efficient means to organize and access memory contents that are so interrelated to form a unit of information storage. This includes, for example, low-level features like constants, data variables, address variables, opcode/microcode and, more importantly, high-level programming language features such as arrays, callable units (e.g., functions, methods, subroutines), loops, matrices, vectors, trees, lists, classes and objects (as known from object-oriented programming), threads, etc. These and other features may be mixed and combined into predefined or user-defined units of information storage, i.e. application memory objects. Application memory objects may be composite objects, including references to more than just one basic memory object. Eventually, stored information referenceable through the memory object may also include metadata, e.g., metadata about the memory object itself (date of creation, creating entity, size, permissions) and/or metadata about the information stored in the memory object's fragments, e.g. information on the data type and size of chunks of fragments (code chunk, data chunk, ...).

Different memory objects are distinguishable and can be referenced via a unique object identifier, called OlD for short. A memory object may be empty upon creation, e.g., not yet contain any information stored in main memory or valid references to such information. The fragments contained in each memory object typically have a predefined size, e.g. 64 byte worth of physical memory in the distributed store, and can relate to any kind of information, including but not limited to, e.g., instructions (code), numerical data or operands consumed by the processing unit while executing instructions, and metadata associated with the memory object. Each fragment has a specific location within the memory object, which is indicated by an offset variable and used for addressing by the compute cores. Fragments that are consecutive in the memory object's logical address space can be structured into and collectively referenced as chunks, e.g. data chunks related to the storage of vector or array elements, or code chunks related to the storage of a set of program instructions.

A particular fragment of memory can be referenced by the combination of object identifier and fragment offset with respect to the memory object that is containing the fragment. This combination is unique across all coexisting memory objects that access information stored in computer memory, e.g. shared primary memory in a supercomputer comprising many compute cores that are each capable of generating and holding multiple memory objects. In consequence, a fragment of memory generally becomes inaccessible if the corresponding memory object ceases to exist, e.g. upon destruction of the memory object. On the other hand, the logical address space of each memory object is isolated from the logical address spaces of all the other coexisting memory objects, thereby improving computer security. Memory objects are an efficient implementation against unauthorized memory access, because the memory object that is requesting access to fragments belonging to a different memory object is unaware of the different memory object's identifier.

Furthermore, the inputs and outputs of tasks are stored as immutable memory objects in the globally accessible, shared computer memory during the time the computer program is running. More specifically, a task that is running on one of the executor submodules of the distributed task scheduler is given temporary write access to an output object (memory object in the shared memory whose purpose is to hold task outputs, e.g. computed intermediary or final results). This task then owns the output object. This means that a local version of the initially empty output object becomes writeable with respect to its owner task. This initial local version of the output object can be understood as an initial although empty working copy of the memory object, which has not yet been written back to the shared global memory. The copy is empty as it has been declared just before calling the task and therefore does not have any contents yet. The working copy/initial version of the output object is created locally on the compute node where the owner task is executing, e.g. in the executor submodule that runs the owner task. After completion of the task's code blocks, the write access right to the output object is removed and the local working copy/version of the output object is flushed to the read-only shared global memory. At this moment, the output object then becomes globally accessible by all the other compute nodes, provided the corresponding OlD has been revealed. Child tasks or sibling tasks whose inputs depend on the previously computed data of the output object, e.g. tasks comprising the OlD of the output object as input argument, are granted read-only access by default. In consequence, the memory objects manipulated by the tasks are effectively treated as immutable objects. Tasks that require the modification of data present in one of the memory objects will first create new memory objects that are copies of the memory objects of which the content has to be modified. Using immutable memory object for task inputs and outputs has the advantage that synchronization means such as locks or barriers are not required when the concurrently or parallelly executed computer program code requires access to the global shared memory.

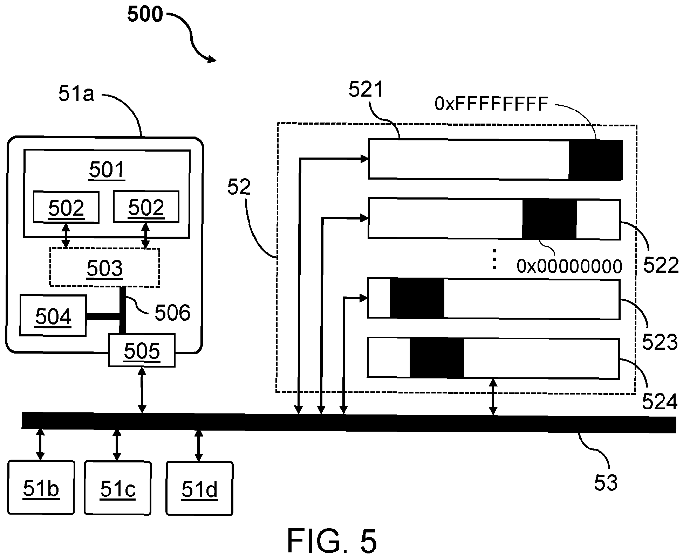

With reference to FIG. 5, a distributed computing system in accordance with an embodiment of the invention is shown. The distributed computing system 500 comprises a plurality of distinct compute nodes 51a-d and a globally accessible, shared computer memory 52. The shared computer memory 52 may be a distributed computer memory, comprising or consisting of a plurality of storage nodes 521 to 524, each containing a network interface and a memory module with memory controller (not shown).

A typical compute node 51a comprises RTM hardware unit 510 that implements the worker module on this compute node. One or more compute cores 502 correspond to the execution hardware units of the executor submodule of the worker that is implemented on that compute node. The compute cores 502 may be any register-based processor core with RISC, CISC or VLIW-type architecture as known in the art. A typical compute core comprises multiple functional hardware units (e.g. instruction unit, execution units, control unit) and register sets as components. The functional units, in turn, may be constructed from several different or repeated subcomponents; the execution unit, for instance, may comprise one or multiple arithmetic logic units (ALUs), one or multiple floating-point unit (FPU), a load-store unit, etc. The cores 502 of the compute nodes can execute computational tasks with respect to any memory object; different memory objects being distinguished through different addresses at the core level (e.g. the OlD is part of the address at core level).

The compute cores 502 may be coupled to the distributed, shared computer memory 52 through an object cache 503 of the compute node. The compute cores 502 may request access to memory object fragments directly from the object cache 503, or indirectly if memory object fragments held in the object cache are transferred onto a faster scratchpad memory (not shown) prior to consumption by the compute cores. Memory objects fragments for consumption by the compute cores 502 are prefetched from the global shared memory 52 and placed into the respective object cache 503. Caching memory objects is advantageous as it allows to further reduce the latencies of computer memory operations. Nonetheless, cache-free implementations are also feasible in alternative embodiments of the invention.

A memory object management unit (MOMU) 504 is configured to calculate the physical memory addresses of memory object fragment in the distributed computer memory 52 for which memory access has been requested by the compute cores 502. The MOMU 504 and the object cache 503, as well as other components of the compute node, are capable of exchanging messages over a node-local communication network 506, e.g. a system bus or a network-on-a-chip, NoC. A communication interface 505, e.g. a cluster network interface, connects the compute node 51a to a cluster-wide communication network 53. Further compute nodes 51b-d and the individual storage nodes 521 to 524 of the distributed shared memory 52 are also connected to the cluster-wide communication network 53. A unique network address is assigned to each addressable end node of the cluster-wide network 53, including the compute nodes 51a-d and the storage nodes 521 to 524. A portion of the physical memory addresses calculated by the MOMU 504 of each compute node, e.g. a bit field of predetermined length, preferably corresponds to the unique network address of one the storage nodes 521 to 524. The fragments of a single memory object are scattered across the different storage nodes 521 through 524 and indicated as black regions in their respective physical memories.

The memory object management unit 504 resembles the memory management unit (MMU) of conventional computer architectures in that it contains hardware for address translation. Traditionally, the MMU is configured for paging, i.e. the division of virtual address spaces into pages, and translation of virtual addresses into physical memory addresses by the use of page tables. Page table entries may be partly held in private memory of the MMU or a translation lookaside buffer (TLB), operatively coupled to the MMU, to assist the MMU with the address translation task. TLB misses cause the CPU or the operating system to start a page walking process in which page table entries are retrieved from main memory. The MMU is also responsible for raising page fault exceptions in the event that no page table entry is found in main memory with respect to the virtual memory address currently being translated. A conventional MMU thus spends considerable amounts of time and energy to perform address translations by lookup operations in page tables. In contrast thereto, the memory object management unit (MOMU) in accordance with embodiments of the present invention is configured to derive the physical memory address corresponding to the memory object fragment that is referenced by the compute units or cores by way of calculation. More specifically, the MOMU calculates the physical memory address as a function of the fragment offset and the OlD for the memory object that contains the referenced fragment. In preferred embodiments of the invention, the MOMU calculates the physical memory addresses according to a hash function - the shared computer memory is then configured as a distributed hash table, wherein each object fragment in the globally shared computer memory corresponds to a stored value of the distributed hash table and a physical memory address of the object fragment corresponds to an input key for querying the distributed hash table. Hence, no lookup operations for page table entries are necessary, page tables do not have to be maintained in computer memory and page fault exceptions never occur. An OlD generation unit of the MOMU may be configured to issue new OIDs in response to an OlD request from a requester, e.g. the RTM units 501 of the compute nodes which request new OIDs for memory objects pertaining to child tasks or memory object pertaining to task inputs or outputs, e.g. result of a mathematical computation or transformation (number or vector addition, multiplication, scaling operations or more complex arithmetic functions such as logarithms, exponentials, or trigonometric functions, and others). In embodiments of the invention, the MOMU may generate the OlD as a snowflake ID, e.g. combine timestamping information and a node identifier (unique) to obtain a memory object identifier (OID) that is unique. In alternative embodiments, the OlD generation unit of the MOMUs can be implemented, e.g. embedded, in the RTM units 501 of the compute nodes.

A particular type of memory access request messages is concerned with memory object manipulations that target the metadata associated with memory objects, e.g. metadata stored in a dedicated metadata chunk of the memory object which also includes security attributes (access permissions) related to the memory object. These memory object manipulation operations may be handled by an object manipulation unit of the MOMU. They may include the splitting or merging of two distinct memory objects, the change of access permissions, and others. In some embodiments of the invention, an object storage firewall may be provided as part of each compute node, which is configured to manage privileges, verify and grant access rights related to memory objects, or parts thereof, when passing through the MOMU.

In preferred embodiments of the invention, a portion of the calculated physical address, e.g. the k most significant bits, directly form a corresponding network address for one the memory modules, whereas the least significant bits can be used by a local memory controller of the receiving memory module to determine the location in the local memory that has been attributed to the memory module. Alternatively, a network address for the physical address can be obtained by calculation or via a lookup table.

In contrast to conventional compute architectures, information stored in the framework of memory objects does not have to undergo a lengthy search. When information is fetched from a remote node in traditional implementations multi-node compute clusters, the requesting node first checks all its cache levels before the operating system is queried, sends a message to the remote node, retrieved the requested data and finally hands it over to the requesting node. In embodiments of the invention, no such complex information retrieval process is necessary, because the MOMU of the requesting compute node can exactly locate the requested piece of information in memory through a calculation of the physical memory address. A network packet can then be issued directly to the distributed memory controller whose store unit holds the information. Hence, neither the operating system nor a central database is involved in the information retrieval, whereby resources and latency related to information access are significantly reduced.

In embodiments of the invention, stored fragments of each individual memory object are scattered over the whole distributed, shared and globally available computer main memory, e.g. distributed in a random and uniform manner over the physical address space associated with the global shared computer main memory. The MOMU of each compute node can quickly compute the physical memory address corresponding to memory fragments accessed by the compute cores of that same compute node and thus gather memory object fragments that are scattered over a large number of remote store nodes in a node-local prefetch memory (local memory subsystem of the compute node). Stored memory object fragments can also be shared among multiple tasks that are executed by the worker's executor submodules belonging to different compute nodes. Tasks executed on one compute node generate memory objects that normally cannot be accessed on the distributed shared computer memory through MOMUs of different compute nodes, because their respective OIDs are dependent on the compute node and will not be known by other compute nodes. However, compute nodes may still exchange OlD information in the context of task stealing. In order to access memory object content on a different compute node than the compute node that first created this memory object, the object storage firewall of the different compute node may first verify that the correct access rights have been granted. For instance, read permissions may be granted for a pool of tasks that have been assigned to the same first security group, e.g. user group, irrespective of the compute nodes cores that are actually executing the tasks. If no or insufficient/wrong access rights have been granted, the access will be denied. Typically, only the owner task of an OlD can write, while others have read access. Software locks may be used to handle write permissions set by the programmer.

As described previously, the compute nodes composing the distributed computing system may each contain an object cache memory that is storing memory objects, or relevant parts thereof, at the compute node-level. Even though it is feasible to maintain more than one local copy of a memory object, or fragments thereof, in a corresponding number of compute nodes, not every compute node is allowed to modify or write into a memory object that is a shared resource. More specifically, only the node-bound task that caused the generation of the memory object as shared resource may have the right to alter the contents of the memory object, while tasks that are not native to the node are lacking these rights. Tasks running on different nodes may still be able to read information content of shared memory objects that are stored in the local object cache memory. Typically, no consumer task is spawned while a producer task is running on the same object such that write inconsistencies in shared memory objects are avoided.

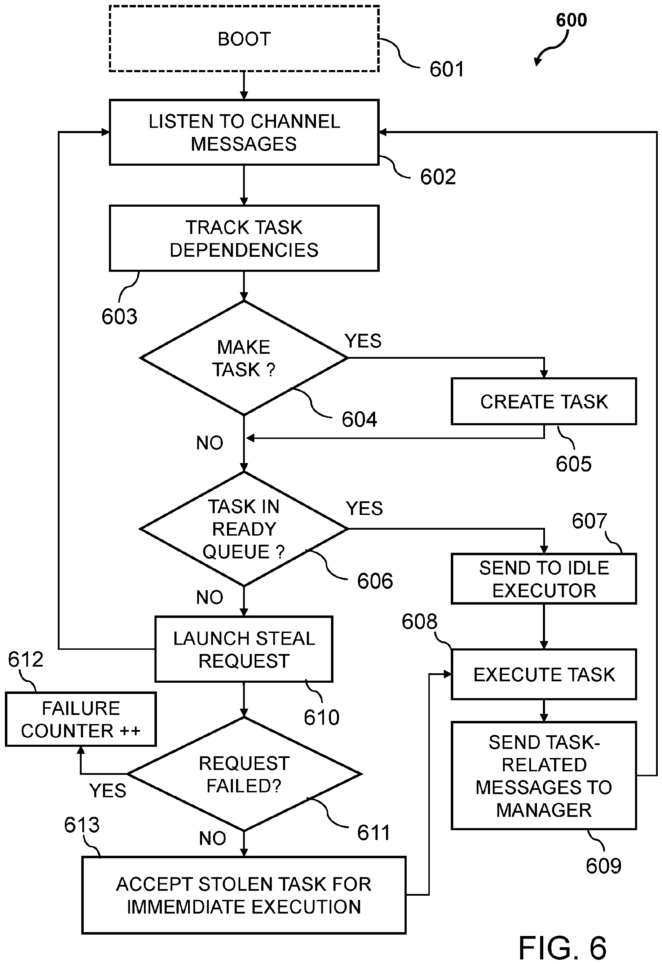

Task scheduling method steps performed by the individual worker modules of a distributed task scheduler in accordance with embodiments of the invention are briefly summarized in FIG. 6. As explained before, the worker of the distributed task scheduler may be initialized and set up in accordance with a global boot process 601. One or more user programs may be loaded by a kernel, thereby providing the root task of the dynamic task tree decomposition of the user program(s) into tasks. As part of the worker's continuous scheduling loop, the worker's manger submodule then starts listening to the message channel for incoming messages from the executor submodule or remote workers in step 602. For incoming task steal requests during the listening step 602, the worker may follow the steps of FIG. 4 as explained hereinabove. Dependencies of already created tasks are updated locally in step 603, e.g. by adjusting the counters for start and stop dependencies of the pending task objects in the worker's pending task queue, in response to addition requests for start and stop dependencies that the manager submodule has retrieved from the message channel in the previous step. The dependency tracking step 603 also comprises the sub-step of placing a task object referred to in the ready task queue into the ready task queue, provided that the start dependency count of the referred task has reached zero.

The worker's manager submodule may also check in step 604 whether a task creation request from the executor submodule has been received. If this is the case, the manager submodule creates the requested child task that the parent task running on the executor has spawned in step 605, thus contributing to the ongoing program decomposition into tasks forming a dynamic task tree structure. The freshly created task can be put on the appropriate task queue of the worker (e.g., pending or ready queue) in response to a scheduling request that the manager submodule reads from the message channel at a later iteration of the listening step 602.

Next, the worker's manager submodule checks whether there are tasks that have the 'ready for execution' status in step 606, e.g., by verifying the presence or absence of task objects in the ready (de)queue. If one or multiple tasks are available in the ready queue, the worker's manger submodule may pick and send the earliest-placed task over the message channel to the executor submodule in step 607, assuming that the executor is in an idle state. No tasks from the ready queue are sent to the executor if the manager submodule detects a `busy' state for the executor. If there are several idle executors available in the worker module, then the manager submodule may dispatch more than one 'ready' task to the respective executors.

The executor submodule(s) of the worker then proceeds with the execution of the code block of the previously sent tasks in step 608 and temporarily signal a `busy' state to the manager submodule. During task execution or upon completion of task code block execution by the execution hardware of the executor, the executor may send relevant task-related information over the message channel to the manager submodule, as indicated in step 609. Task-related information includes task completion notification, task spawning/creation requests, task scheduling requests, dependency addition requests, etc. After task execution, the executor submodule signals its `idle' state back to the manager submodule.

If no task object is present in the ready (de)queue in step 606, the worker's manager submodule may decide to launch a task stealing request to a remote, e.g. randomly picked, worker module of the distributed task scheduler in step 610, under the conditions established in relation to and following the steps defined in the example embodiment of FIG. 3. The worker's manager submodule indicates a 'stealing' state and while waiting for a response from the remote worker module resumes the next iteration of its scheduling loop by returning to step 602. If the failure of the previously launched task stealing request is detected in step 611 during a subsequent iteration of the worker's scheduling loop, a counter for the number of repeatedly issued, unsuccessful stealing attempts may be incremented in step 612 and the manager submodule switches back to a 'non-stealing' state. Otherwise, the task stealing request was successful and a 'ready' task of the targeted victim worker module is transferred to the (thief) worker, which accepts the stolen task in step 613 and marks the stolen task for immediate execution, e.g. by placing it on a dedicated stolen-task queue or buffer. The manager submodule also switches back to a 'non-stealing' state. The worker's executor accesses and executes the stolen task as soon as possible, i.e. as soon as its hardware execution units leave the `busy' or 'running' state.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. A dynamic task scheduling method (600) for task-based computer programs executing on a distributed computing network (500) comprising a plurality of compute nodes (51a-d), each compute node comprising a worker module (110a-d), the worker modules of the different compute nodes being interconnected by a communication network (101) and forming a distributed task scheduler (100), the method comprising the steps of:
- decomposing a computer program into a plurality of tasks at runtime, by dynamically creating tasks (605) in respective ones of the worker modules in accordance with a tree structure, referred to as task tree, each task corresponding to a vertex of the task tree and referring to a unit of computational work, said tasks being created in a parent-child relationship;
- adding dependencies to the dynamically created tasks to constrain an execution order thereof, including adding stop dependencies to parent tasks upon creation of their respective child tasks and adding start dependencies to sibling tasks being subject to the prior execution of at least one other sibling task, said dependencies being added locally in each worker module to the tasks previously created by the respective worker module;
- in each worker module, tracking (603) the dependencies of the tasks created within the worker module and changing a status of the respective tasks from 'pending' to 'ready for execution' if all the start dependencies have been resolved;
- issuing a task stealing request (610) to a remote worker module if none of the tasks within one of the worker modules has the 'ready for execution' status, the worker module issuing the task stealing request being referred to as the stealing worker module;
- accepting migration of a task (613) from the remote worker module to the stealing worker module, referred to as the stolen task, provided that the stolen task has the 'ready for execution' status.

2. The method (600) of claim 1, further comprising:
- executing tasks (608) having the 'ready for execution' status on execution hardware of the worker module wherein the respective task is currently located;
- removing stop dependencies from parent tasks upon finishing the execution of their respective child tasks;
- removing start dependencies from sibling tasks being subject to other sibling tasks upon finishing the execution of the said other sibling tasks.

3. The method (600) of any one of the preceding claims, wherein tracking the dependencies of the tasks comprises incrementing or decrementing counters for the start and stop dependencies.

4. The method (600) of any one of the preceding claims, further comprising:
- randomly picking the remote worker module whereto the task stealing request is issued, and/or
- migrating the task that has the 'ready for execution' status for the longest time as the stolen task from the remote worker module to the stealing worker module.

5. The method (600) of any one of the preceding claims, further comprising:
- In each worker module, counting the task stealing requests issued by the worker module during a prescribed time period to obtain a frequency of task stealing attempts by the worker module;
- temporarily suspending the issuing of task stealing requests by the worker modules for which the frequency of task stealing attempts exceeds a permitted maximum frequency.

6. The method (600) of any one of the preceding claims, further comprising:
- sending a task stealing failure message to the stealing working modules in response to the task stealing request if none of the tasks present in remote worker modules has the 'ready for execution' status;
- setting the stealing working module to a stealing state when issuing the task stealing request to the remote worker module and back to a non-stealing state when accepting migration of the task from the remote worker module or receiving the task stealing failure message from the remote worker module.

7. The method (600) of any one of the preceding claims, each worker module comprising a ready queue and a pending queue as task status-dependent queues, the method further comprising:
- storing the tasks that have the 'ready for execution' status in the respective ready queues of the worker modules;
- storing the tasks that have the 'pending' status in the respective pending queues of the worker modules;
- moving tasks from the respective pending queues to the corresponding ready queues when their statuses change from 'pending' to 'ready for execution'.

8. The method (600) of any one of the preceding claims, further comprising:
- immediately executing the stolen task on execution hardware of the stealing worker module if no other task is currently executing on the stealing worker module;
- prioritizing the execution of the stolen task on execution hardware of the stealing worker module if another task is currently executing on the stealing worker module.

9. The method (600) of any one of the preceding claims, wherein the tasks are executed in a continuous and uninterrupted manner, the method further comprising:
- storing task outputs obtained during task execution as fragments of a distributed memory objects in a distributed, globally shared computer memory coupled to the plurality of compute nodes;
- loading the fragments of one or more distributed memory objects as task inputs from the distributed, globally shared computer memory, wherein input arguments of the tasks comprise unique object identifiers for the one or more distributed memory objects stored in the distributed, globally shared computer memory.

10. The method (600) of any one of the preceding claims, wherein the migration of the stolen task comprises:
- migrating the stolen task from the remote worker module to the stealing worker module without transmitting start and stop dependencies of the stolen task and without transmitting input data of the stolen task.

11. A distributed task scheduler (100) for a distributed computing system (500) comprising a plurality of compute nodes (51a-d), the task scheduler comprising a plurality of worker modules (110a-d) implementable on respective ones of the plurality of compute nodes, the different worker modules being interconnected by a communication network (101), and each worker module comprising:
- a manager submodule (111),
- at least one executor submodule (113) comprising or controlling task execution hardware, and
- a message channel (112) operatively connecting the manager submodule to the executor submodule and the manager submodules of the remote worker modules via the communication network;
wherein the manager submodule of each worker module is configured to:
- create tasks dynamically in a parent-child relationship and in accordance with a tree structure, referred to as task tree, thereby enabling a decomposition of a computer program into a plurality of tasks at runtime, each task corresponding to a vertex of the task tree and referring to a unit of computational work;
- add dependencies to the tasks to constrain an execution order thereof, including stop dependencies for parent tasks with respect to newly created child tasks and start dependencies for sibling tasks being subject to the prior execution of at least one other sibling task;
- track the dependencies of the tasks created in the respective worker module and changing a status of the respective tasks from 'pending' to 'ready for execution' if all the start dependencies have been resolved;
- send tasks having the 'ready for execution' status through the message channel to one of the at least one executor submodule;
- issue a task stealing request to a remote worker module if none of the tasks present in the worker module has the 'ready for execution' status;
- accept migration of a task from the remote worker module, referred to as the stolen task, in response to the task stealing request, provided that the stolen task has the 'ready for execution' status;
and wherein each executor submodule of each worker module is configured to:
- receive tasks having the 'ready for execution' status from the message channel and execute said tasks on the task execution hardware comprised or controlled by the executor submodule.

12. The distributed task scheduler (100) of claim 11, wherein the manager submodule of each worker module further comprises counters for the start and stop dependencies and is configured to track task dependencies by incrementing or decrementing the respective counters.

13. The distributed task scheduler (100) of claim 11 or 12, wherein each worker module further comprises a ready queue and a pending queue as task status-dependent queues, the manager submodule of each worker module further being configured to:
- store the tasks that have the 'ready for execution' status in the ready queue;
- storing the tasks that have the 'pending' status in the pending queue;
- move tasks from the pending queue to the ready queue when their statuses change from 'pending' to 'ready for execution'.

14. The distributed task scheduler (100) of any one of claims 11 to 13, wherein the manager submodule of each worker module is further configured to:
- respond to the task stealing requests form the remote worker modules by returning a task stealing failure message if none of the tasks present in the worker module has the 'ready for execution' status, or else transmitting one of the tasks having the 'ready for execution status';
- count the task stealing requests issued during a prescribed time period and obtain a frequency of task stealing attempts;
- temporarily suspending the issuing of task stealing requests if the frequency of task stealing attempts exceeds a permitted maximum frequency.

15. The distributed task scheduler (100) of any one of claims 11 to 14, wherein each executor submodule of each worker module is further configured to:
- notify the manager submodule through the message channel of tasks that have finished executing on the task execution hardware, referred to as completed tasks;
and wherein the manager submodule of each worker module is further configured to:
- check the message channel for any completed tasks;
- remove the stop dependencies for the parent tasks of the completed tasks;
- remove the start dependencies for the sibling tasks that are subject to the completed task.
